Europäisches Patentamt

European Patent Office

Office européen des brevets

(11) Veröffentlichungsnummer: **0 409 283 A1**

# (12) EUROPÄISCHE PATENTANMELDUNG

(21) Anmeldenummer: **90114031.9**

(22) Anmeldetag: **21.07.90**

(51) Int. Cl.5: **F16L 7/00**

(30) Priorität: **21.07.89 DE 3924183**

(43) Veröffentlichungstag der Anmeldung:
**23.01.91 Patentblatt 91/04**

(84) Benannte Vertragsstaaten:
**AT DE FR IT SE**

(71) Anmelder: **HYDAC TECHNOLOGY GMBH**
**Postfach 1251**
**D-6603 Sulzbach/Saar(DE)**

(72) Erfinder: **Kasubke, Volker**
**Wilhelm-Jungstrasse 20**
**D-6680 Neunkirchen(DE)**

(74) Vertreter: **Patentanwälte Phys. Bartels**
**Dipl.-Ing. Fink Dr.-Ing. Held**
**Lange Strasse 51**
**D-7000 Stuttgart 1(DE)**

(54) Rohr- in Rohr-Führung und Vorrichtung zur Herstellung derselben.

(57) Rohr- in Rohr-Führung mit mindestens einer Abstandhaltereinrichtung (20,120) zum vorzugsweisen zentrischen Führen eines fluidführenden Innenrohres (10,110) in einem Außenrohr (16,116) , die mindestens zwei voneinander getrennt angeordnete Distanzstücke (36,136) aufweist, die bevorzugt in einer Ebene liegend in vorgebbaren Abständen voneinander zwischen Innen- (10,110) und Außenrohr (16,116) anordenbar sind, wobei das jeweilige Distanzstück (36,136) eine geschlossene Außenumfangslinie (38,138) aufweist, die zumindest in ihrem unverformten Zustand eine Krümmung hat, die vorzugsweise aus einem ellipsen-, kreis- oder kugelförmigen Distanzstück (36,136) gebildet ist. Die Erfindung bezieht sich auch auf eine Vorrichtung zum Herstellen der Rohr- in Rohr-Führung, die den Montagevorgang für die Distanzstucke (136) auf dem Innenrohr (110) erleichtert.

Fig.1

## ROHR- IN ROHR-FÜHRUNG UND VORRICHTUNG ZUR HERSTELLUNG DERSELBEN

Die Erfindung betrifft eine Rohr- in Rohr-Führung mit mindestens einer Abstandhaltereinrichtung zum vorzugsweisen zentrischen Führen eines Innenrohres in einem Außenrohr, die mindestens zwei voneinander getrennt angeordnete Distanzstücke aufweist, die bevorzugt in einer Ebene liegend in vorgebbaren Abständen voneinander zwischen Innen- und Außenrohr anordenbar sind.

Derartige Rohr- in Rohr-Führungen dienen unter anderem dazu, bei einer Beschädigung des Innenrohres zu verhindern, daß ein in dem Innenrohr befindliches Fluid in die Umgebung gelangt und dabei die Umwelt verunreinigt.

Dahingehende Schadensfälle können vor allem bei Hydraulikrohren auftreten, die eine Hydraulikflüssigkeit mit sehr hohen Drücken aufnehmen.

Bei einer gattungsgleichen Rohr- in Rohr-Führung gemäß dem DE-GM 1 900 434 sind die voneinander getrennt angeordneten Distanzstücke einer Abstandhaltereinrichtung, die in einer Ebene liegend in vorgebbaren Abständen voneinander zwischen einem Innen- und einem Außenrohr angeordnet sind, aus halbkreisförmigen Schalen gebildet, die als federnde Elemente unter einer Vorspannung mit ihren beiden Enden jeweils an dem Innenumfang und dem Außenumfang des Außen- bzw. des Innenrohres anliegen. Diese bekannten Halbschalen, die mithin im Gegensatz zu der Erfindung keine geschlossene Außenumfangslinie aufweisen, sind aufgrund ihrer Elastizität in der Lage, der Ausdehnung des Innenrohres bei einer Temperaturerhöhung des durchströmenden Mediums nachzugeben und demgemäß Außen- und Innenrohr zueinander ständig in koaxialer Lage zu halten. Sobald aber bei dieser bekannten Rohr- in Rohr-Führung die beiden Rohre gegeneinander verdreht werden, was beispielsweise bei bestimmten Temperaturverhältnissen oder bei schwellender Beanspruchung vor allem des Innenrohres der Fall ist, lösen sich bei dieser Relativbewegung die halbschalenförmigen Distanzstücke zwangsläufig von ihrer vorgesehenen Stelle und geben das Innenrohr frei. Dies erfolgt bereits dann, wenn nur eines der bekannten Distanzstücke aus seiner Lage gerät. Liegt dann das Innenrohr aber erst einmal auf dem Innenumfang des Außenrohres auf, sind das Rohrmaterial schädigende Reibungen nicht mehr auszuschließen. Auch werden ungedämpft Schwingungen des Innenrohres auf das Außenrohr übertragen und der Wärmeübergang an der Stelle der Berührung der beiden Rohre miteinander ist ein anderer als an den übrigen Stellen des Innenrohres, was zu einer nachteiligen, ungleichmäßigen Wärmeverteilung innerhalb des zu transportierenden Fluids führt.

Soweit die Rohre verschiedene, insbesondere metallische, Materialpaarungen miteinander bilden, treten dann das Rohrmaterial schädigende elektrochemische Korrosionsvorgänge auf.

Bei einer weiteren bekannten gattungsgleichen Rohr- in Rohr-Führung gemäß der DE-PS 352 616 sind die Distanzstücke aus einzelnen Schraubenfedern gebildet, die ohne eine geschlossene Außenumfangslinie aufzuweisen mit ihren beiden Enden jeweils an einem Innen- und einem Außenring anliegen, der auf dem Innen- bzw. auf dem Außenrohr befestigt ist. Für das Befestigen des Außenringes auf dem Außenrohr weist dieser vorstehende Dornen auf, die durch den Eingriff in das Außenrohr dessen Festigkeit schwächen. Für dünnwandige Außenrohre ist die in der DE-PS 352 616 aufgezeigte Rohr- in Rohr-Führung deshalb gänzlich ungeeignet.

Eine gattungsgleiche Rohr- in Rohr-Führung ist auch durch die DE-AS 1 675 323 bekannt. Dort sind die Distanzstücke aus einzelnen flachen Stegen gebildet, die an ihren Enden, mit denen sie jeweils in Anlage sind, mit dem Außenumfang und dem Innenumfang des Innenrohres bzw. des Außenrohres kleine Auflageflächen aufweisen, wobei das jeweilige dem Innenrohr zugekehrte Ende eine Abschrägung aufweist, um die Kontaktfläche mit dem Innenrohr so klein wie möglich zu gestalten. Die Stege einer diesbezüglichen Abstandhaltereinrichtung sind über zwei Metallringe, die an der dem Innenrohr zugekehrten Hälfte eines jeden Steges angreifen, senkrecht zur Außenumfangsfläche des Innenrohres auf diesem gehalten. Dies ermöglicht zwar eine perfekte Zentrierung des Innenrohres in dem Außenrohr. Allein bei der bereits beschriebenen Relativbewegung, bei der die beiden Rohre im Sinne einer Drehbewegung gegeneinander versetzt werden, tritt eine Kippbeanspruchung der einzelnen Stege auf, was zu einem Wegklappen derselben und damit zu einer Freigabe des Innenrohres führt.

Selbst wenn dieser ungünstigste Fall nicht eintreten sollte, entsteht jedenfalls zwischen den beiden Rohren und den Stegen eine derartige Reibung, daß Beschädigungen zu erwarten sind.

Ausgehend von diesem Stand der Technik liegt der Erfindung die Aufgabe zugrunde, eine Rohr- in Rohr-Führung zu schaffen, bei der das Innenrohr derart in dem Außenrohr geführt ist, daß bei jedweder Relativbewegung der Rohre zueinander Beschädigungen mit Sicherheit vermieden sind, ein Freigeben des Innenrohres aus seiner Führung nicht auftritt und Rohre mit beliebig vorgebbaren Wandstärken ineinanderführbar sind.

Diese Aufgabe wird mit den Merkmalen des Anspruchs 1 erfindungsgemäß gelöst. Dadurch, daß das jeweilige Distanzstück eine geschlossene Außenumfangslinie aufweist, die zumindest in ihrem unverformten Zustand eine Krümmung hat, die vorzugsweise aus einem ellipsen-, kreis- oder kugelförmigen Distanzstück gebildet ist, ist bei der erfindungsgemäßen Rohr- in Rohr-Führung eine Art Wälz- oder Gleitlagerung verwirklicht, bei der die jeweiligen Distanzstücke die Wälz- bzw. die Gleitkörper darstellen. Ist nun die Beanspruchung der beiden Rohre derart, daß diese beispielsweise in ihrer Lage zueinander verdreht werden, können sich die Distanzstücke über ihre geschlossene Außenumfangslinie vergleichbar den Wälz-oder Gleitkörpern mitdrehen bzw. mitgleiten und dafür Sorge tragen, daß das Innenrohr zu dem Außenrohr ständig seine vorgesehene, insbesondere koaxiale Lage beibehält. Die hierfür vorgesehene Bewegung der Distanzstücke ist also eine Abroll-und/oder eine Gleitbewegung, die materialschonend ist. Beschädigungen an den Rohren und/oder an der Abstandhaltereinrichtung sind derart vermieden. Die Distanzstücke brauchen auch für eine dahingehende Abstützung weder in die Wandung des Innen- noch des Außenrohres einzugreifen, was erlaubt, im Rahmen des Sinnvollen, Rohre mit nahezu beliebig vorgebbaren Wandstärken ineinanderzuführen.

Bei einer besonders bevorzugten Ausführungsform weist bei der erfindungsgemäßen Rohr- in Rohr-Führung die jeweilige Abstandhaltereinrichtung einen vorzugsweise in zwei Teile geteilten Tragkörper auf, der das Innenrohr umschließt und der Ausnehmungen aufweist, deren jeweilige Außenkontur im wesentlichen der Krümmung des aufzunehmenden Distanzstückes entspricht oder schwächer ist und in die die Distanzstücke lose einlegbar sind. Mit dem Tragkörper ist, sofern man den Vergleich mit einem Wälz- oder Gleitlager heranzieht, eine Art Käfig gebildet, der der Aufnahme der Distanzstücke dient. Durch das lose Einlegen der Distanzstücke in die Ausnehmungen des Tragkörpers können diese innerhalb des für sie vorgesehenen Freiraumes ungestört eine etwaige Abwälzbzw. Gleitbewegung durchführen. Sofern der Tragkörper in zwei Teile geteilt ist, sind zwei im wesentlichen gleichartige Tragkörperhälften gegeben, die als standardisierte Teile kostengünstig und einfach herstellbar sind. Gemäß Definition ist ein Kreis um so stärker oder schwächer gekrümmt, je kleiner bzw. größer sein Radius ist. Sobald die Außenkontur der Ausnehmung im Querschnitt eine Krümmung hat, die schwächer ist als die Krümmung des jeweils aufzunehmenden Distanzstückes, verringert sich mit abnehmender Krümmung der Außenkontur die Auflagefläche des Distanzstückes in der Ausnehmung bis zur Linienberührung hin und es entsteht zwischen diesen beiden Teilen ein zunehmendes Spiel, das der Bewegungsfreiheit des Distanzstückes in der Ausnehmung dient. Rollt nun das jeweilige Distanzstück bei einer Drehbewegung der Rohre zueinander im oder gegen den Uhrzeigersinn ab, verjüngt sich die Ausnehmung und das Spiel zwischen Distanzstück und Ausnehmung nimmt ab, was zu einer zunehmenden Klemmwirkung auf das Distanzstück führt, die die Neigung hat, über die Abstandhaltereinrichtung die Rohre in ihre ursprüngliche Lage zurückzustellen.

Bei einer weiteren besonders bevorzugten Ausführungsform der Rohr- in Rohr-Führung sind die Ausnehmungen seitlich durch Rippen begrenzt, die sich parallel zur Längsrichtung des Innen- und Außenrohres erstrecken, und die vorzugsweise zumindest teilweise mit durchgehenden Bohrungen versehen sind. Durch die seitlichen Rippen wird zum einen der Abstand der Distanzstücke zueinander vorgegeben, und zum anderen eine Stützung der Distanzstücke erreicht, die demgemäß bei jedweder Belastung ihre eingenommene Lage im Tragkörper beibehalten. Sofern die Rippen mit durchgehenden Bohrungen versehen sind, dient dies der Materialeinsparung im Tragkörper und verbessert den Flüssigkeitsaustausch vor und hinter der jeweiligen Abstandhaltereinrichtung.

Sofern vorzugsweise an den einander gegenüberliegenden Enden des Tragkörpers jeweils ein hülsenartiger Fortsatz vorhanden ist, der zumindest teilweise einen durchgehenden Einschnitt aufweist, dienen diese der Anlage von Spannschellen, mit denen sich der Tragkörper auf dem Innenrohr auch befestigen läßt.

Bei einer anderen Ausführungsform der erfindungsgemäßen Rohr- in Rohr-Führung weist die Abstandhaltereinrichtung Distanzstücke auf, die zumindest teilweise entlang ihrer jeweiligen Außenumfangslinie mit dem Außenumfang und mit dem Innenumfang des Innenrohres bzw. des Außenrohres unmittelbar in Anlage sind. Hierdurch können alle Distanzstücke einer Abstandhaltereinrichtung bei einer Drehbewegung der beiden Rohre zueinander auf dem Außenumfang und dem Innenumfang des Innenrohres bzw. des Außenrohres mit gleichem Drehsinn und gleicher Drehgeschwindigkeit abwälzen oder entlanggleiten. Da also bei allen Distanzstücken die Abwälzbzw. Gleitbewegung dieselbe ist, bleibt das Innenrohr mit Sicherheit in seiner vorzugsweise konzentrischen Lage zu dem Außenrohr, selbst wenn keines der Distanzstücke seine ursprüngliche Lage beibehält.

Bei einer weiteren bevorzugten Ausführungsform der erfindungsgemäßen Rohr- in Rohr-Führung bestehen deren Distanzstücke aus einem elastischen, vorzugsweise aus einem gummielastischen Material. Durch die hierdurch gebildete elastische Abstandhalterung, die aus kostengünstig herstellbaren Gummihalbzeugen bestehen kann, lassen sich ohne weiteres sämtliche auftretenden Rohrauslenkungen des Innenrohres, beispielsweise im Bereich von Winkelverlegungen, sowie radiale und axiale Bewegungen infolge von Druckstößen und Schwingungen oder dergleichen, im Rohrsystem ohne weiteres aufnehmen. Je nach Auswahl des gummielastischen Materials lassen sich bestimmte anwendungsorientierte Vorgaben erzielen, insbesondere das Dämpfungsverhalten der Rohr- in Rohr-Führung bestimmen. Ferner können quell- und alterungsbeständige gummielastische Materialien bevorzugt Verwendung finden. Sofern die Distanzstücke mit einer vorgebbaren Vorspannung zwischen Innen- und Außenrohr angeordnet sind, ist hierdurch ein besonders gutes Dämpfungsverhalten des Rohrsystems gegeben.

Vorzugsweise ist das jeweilige Distanzstück aus einem Hohlrohrabschnitt mit einer vorgebbaren Länge gebildet. Dieser Hohlrohrabschnitt, insbesondere wenn er aus einem elastischen Material gebildet ist, weist gute Dämpfungseigenschaften auf.

Bei einer weiteren bevorzugten Ausführungsform der erfindungsgemäßen Rohr- in Rohr-Führung sind die jeweiligen Abstandhaltereinrichtungen in vorgebbaren Abständen voneinander längs dem Außen- und dem Innenrohr verlaufend zwischen diesen angeordnet. Die Distanzstücke sind also kontinuierlich entlang der Rohre fortschreitend, in vorgebbaren parallel zur Längsachse der miteinander verbundenen Rohre gemessenen Abständen voneinander, zwischen diesen angeordnet. Mit der erfindungsgemäßen Rohr- in Rohr-Führung lassen sich also beliebig lange Rohre ineinanderführen. Es ist aber auch denkbar, die Distanzstücke, beispielsweise in Form einer Spiralbahn entlang des Außenumfanges des Innenrohres um dieses herum zu gruppieren, was für bestimmte Anwendungsfälle sinnvoll ist.

Sofern man eine radiale Abwälzbewegung der Distanzstücke verhindern will, sind diese mit einer Klemme, vorzugsweise mit einer Bandklemme, in ihrer Lage längs des Außenumfanges des Innenrohres festlegbar.

Bei einer dahingehenden Ausgestaltung gleiten die Distanzstücke bei einer Radialbewegung der beiden Rohre zueinander mit einem Teil ihrer Außenumfangsfläche entlang den ihnen zugeordneten Rohrteilen, insbesondere entlang der Innenumfangsfläche des Außenrohres. Sofern die Distanzstücke aus einem elastischen Material gebildet sind, geht diese Gleitbewegung besonders materialschonend vor sich.

Der Erfindung liegt ferner die Aufgabe zugrunde, eine Vorrichtung dem Anwender zur Verfügung zu stellen, mit der sich die erfindungsgemäße Rohr- in Rohr-Führung in einfacher Weise herstellen läßt.

Diese Aufgabe wird erfindungsgemäß mit den Merkmalen des Anspruchs 11 gelöst. Danach ist eine Vorrichtung zum Herstellen einer Rohr- in Rohr-Führung vorgesehen, die ein zangenförmiges Grundteil aufweist, das mit seinen Backen zumindest teilweise ein Innenrohr umschließt und das mindestens zwei, vorzugsweise drei parallel zur Längsachse des Innenrohres verlaufende Längskörper hat, die in gleichen radialen Abständen voneinander und im wesentlichen senkrecht auf einer Grundplatte stehend auf dieser befestigt und derart ausgebildet sind, daß sie die Distanzstücke zumindest während des Montagevorganges in der hierfür vorgesehenen Lage halten. Hierdurch ist eine Vorrichtung gegeben, mittels der in montagetechnischer Hinsicht in besonders einfacher Weise sich Distanzstücke, die als Abstandhaltereinrichtung dienen, in gleichen radialen Abständen voneinander entlang des Außenumfanges des Innenrohres um dieses herum gruppieren lassen und an diesen Stellen dort so lange gehalten werden können, bis das Außenrohr über das Innenrohr geschoben ist und/oder bis sie mit dem Innenrohr über die bereits angesprochene Klemme fest verbunden sind.

Soweit diese Vorrichtung gemäß dem Merkmal des Anspruchs 12 mit einem Griff zum Führen von Hand versehen ist, läßt sich diese Montagevorrichtung besonders einfach handhaben.

Bei einer weiteren besonders bevorzugten Ausführungsform weist das Grundteil der Vorrichtung mindestens zwei in Richtung der Längskörper verlaufende Stege auf, die mit ihren Außen- und Innenflächen Anlageflächen für den Innenumfang des Außenrohres bzw. für den Außenumfang der Distanzstücke bilden. Auf diese Art und Weise lassen sich aus einem gummielastischen Material bestehende Distanzstücke unter Vorspannung zwischen die Längskörper und den in derselben Richtung verlaufenden Stegen klemmen, so daß die Distanzstücke nach Entfernung der Montagevorrichtung, also nach Aufschieben des Außenrohres mit einer vorgegebenen radialen Vorspannung zumindest an den Innenumfang des Außenrohres zu liegen kommen und dieses somit in seiner räumlichen Lage gegenüber der Lage des Innenrohres festhalten.

Sofern gemäß den Merkmalen des Anspruchs 14 vorzugsweise die hier angesprochenen Stege der Vorrichtung entweder aus mindestens zwei konischen Halbschalen gebildet sind und/oder aus Krallen bildenden Teilen bestehen, die federnd nachgiebig ausgebildet sind, findet während des Montagevorganges eine genaue Justierung der Lage des Außenrohres zu der Lage des Innenrohres statt. Ferner können diese Halbschalen und/oder Krallen bildenden Teile eine Abwinkelung aufweisen, die dazu vorgesehen ist, das Aufgleiten des Außenrohres auf diese Stege für den Justiervorgang zu erleichtern.

Im folgenden ist die Rohr- in Rohr-Führung sowie die Vorrichtung zur Herstellung derselben anhand der Zeichnung näher erläutert.

Es zeigen, teilweise in prinzipieller Darstellung:

Fig.1 einen Querschnitt durch ein erstes Ausführungsbeispiel der erfindungsgemäßen Rohr-in Rohr-Führung,

Fig.2 eine teilweise im Schnitt, teilweise in Seitenansicht dargestellte Abstandhaltereinrichtung nach Fig.1 mit teilweise dargestelltem Innen- und Außenrohr,

Fig.3 einen Querschnitt durch ein zweites Ausführungsbeispiel der erfindungsgemäßen Rohr-in Rohr-Führung,

Fig.4 eine Seitenansicht auf eine Abstandhaltereinrichtung gemäß Fig.3 mit teilweise dargestelltem Innen- und Außenrohr,

Fig.5 eine Stirnansicht auf die Vorrichtung zum Herstellen einer Rohr- in Rohr-Führung gemäß den Fig.3 und 4 nebst Innenrohr und drei Distanzstücken,

Fig.6 eine Seitenansicht in der mit A gekennzeichneten Blickrichtung auf die Vorrichtung gemäß Fig .5 nebst Teil eines Außenrohres.

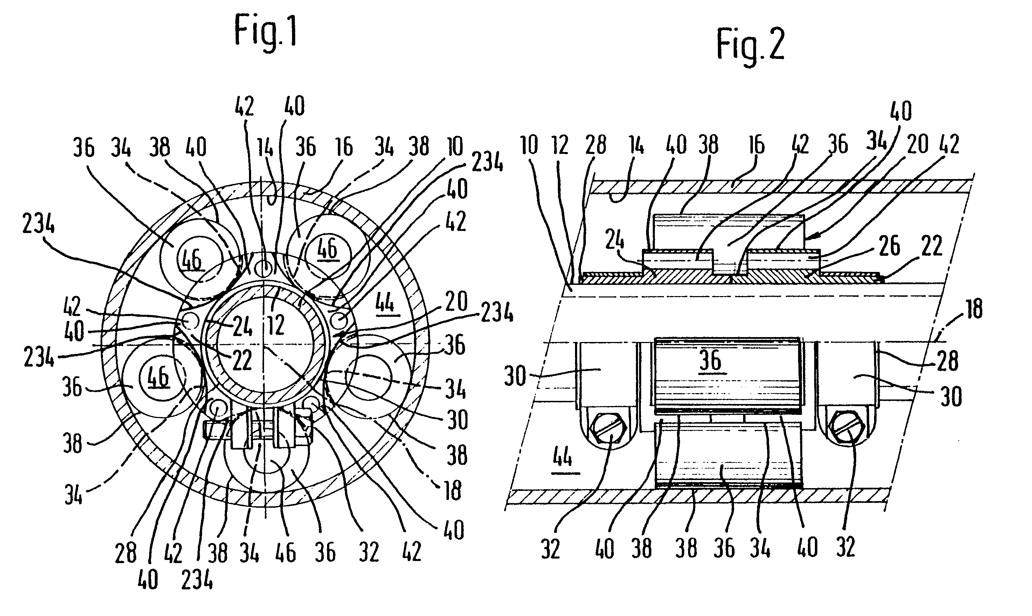

Fig.1 zeigt einen Querschnitt durch ein erstes Ausführungsbeispiel der erfindungsgemäßen Rohr-in Rohr-Führung. Diese weist ein im Querschnitt kreisrundes Innenrohr 10 auf, das für den Transport eines Fluids, beispielsweise in Form von Hydrauliköl, vorgesehen ist. Der Außenumfang 12 des Innenrohres 10 ist allseitig von dem Innenumfang 14 eines Außenrohres 16 mit ebenfalls kreisrundem Querschnitt, aber größerem Durchmesser umschlossen. In der hier beschriebenen Ausführungsform der Rohr- in Rohr-Führung verläuft die jeweilige Längsachse 18 von Innenrohr 10 und Außenrohr 12 parallel und deckungsgleich zu- bzw. miteinander. Es ist also eine koaxiale Anordnung von Innenrohr 10 zu Außenrohr 16 gegeben und eine zentrische Führung des Innenrohres 10 im Außenrohr 16 erreicht.

Für dieses zentrische Führen des Innenrohres 10 im Außenrohr 16 ist eine als Ganzes mit 20 bezeichnete Abstandhaltereinrichtung vorgesehen, die das Innenrohr 10 vom Außenrohr 16 abhebt. Die Abstandhaltereinrichtung 20 weist in dem hier vorliegenden Ausführungsbeispiel gemäß den Fig.1 und 2 einen in zwei Teile geteilten Tragkörper 22 auf, der das Innenrohr 10 unter Anlage mit diesem vollständig umschließt. Die beiden Teile 24, 26 des Tragkörpers 22 (s.Fig.2) bestehen vorzugsweise aus thermoplastischem Werkstoff, wie Polyamid 6, und sind im wesentlichen gleich ausgebildet. Der thermoplastische Werkstoff gewährleistet hier, daß der Tragkörper 22 gut auf das Innenrohr 10 aufgeschoben und an seine für ihn vorgesehene Stelle auf dem Innenrohr 10 verschoben werden kann. An einem Ende eines jeden Teiles 24,26 des Tragkörpers 22 ist ein hülsenartiger Fortsatz 28 vorhanden, der, zumindest teilweise, einen durchgehenden Einschnitt (nicht dargestellt) aufweist. Der jeweilige Fortsatz 28 kann als Anlagefläche für eine Spannschelle 30 dienen, die über eine Schraubverbindung 32 zu ihrem Festlegen auf dem Fortsatz 28 anziehbar ist.

Hierdurch läßt sich der durchgehende Einschnitt verengen und über die Spannkraft der jeweiligen Spannschelle 30 werden die Teile 24,26 des Tragkörpers 22 auf dem Innenrohr 10 festgelegt. Es ist also eine feste Verbindung mittels der Spannschelle 30 zwischen dem jeweiligen Teil 24,26 des Tragkörpers 22 und dem Innenrohr 10 herstellbar. Die beiden den Tragkörper 22 im wesentlichen bildenden beiden Teile 24 und 26 sind derart auf das Innenrohr 10 aufgeschoben, daß sie mit ihrem dem Fortsatz 28 abgekehrten Ende jeweils unmittelbar benachbart aneinanderliegen und demgemäß an den einander gegenüberliegenden Enden des Tragkörpers 22 die beiden Fortsätze 28 vorhanden sind. In dem hier vorliegenden Ausführungsbeispiel sind aber entgegen der Darstellung in Fig.1 die beiden Spannschellen 30 endseitig in Anlage mit dem Tragkörper 22 unmittelbar auf dem Innenrohr 10 angebracht, was den Tragkörper 22 zwar in axialer Richtung festlegt, ihm aber eine umlaufende Drehbewegung auf dem Innenrohr 10 vergleichbar einem Wälzlagerkäfig ermöglicht.

Die jeweilige Abstandhaltereinrichtung 20 weist Ausnehmungen 34 auf, in die Distanzstücke 36 lose einlegbar sind. Hierzu ist die jeweilige Außenkontur einer Ausnehmung 34 im wesentlichen der Krümmung des aufzunehmenden Distanzstückes 36 angepaßt, entspricht mithin also dieser. Wie dies insbesondere Fig.1 zeigt, sind für das vorliegende Ausführungsbeispiel der erfindungsgemäßen Rohr- in Rohr-Führung fünf Distanzstücke 36 und demgemäß auch fünf Ausnehmungen 34 vorgesehen. Die Distanzstücke 36 bestehen aus einem gummielastischen Material in Form eines Elastomeres, wie Nitril-Kautschuk mit einer vorgebbaren Shore-Härte, beispielsweise von 80. Ein jedes Distanzstück 36 besteht aus einem Stück Gummihalbzeug in Form eines Hohlrohrabschnittes, dessen Länge derart vorgegeben ist, daß das jeweilige Distanzstück 36 mit seinen Stirnseiten von der für die Aufnahme dieses Distanzstückes 36 vorgesehenen Ausnehmung 34 umfaßt ist. Das jeweilige Distanzstück 36 weist eine geschlossene Außenumfangslinie 38 in Form einer Kreislinie auf, hat also in ihrem unverformten Zustand eine Krümmung, die aus einem kreisförmigen Distanzstück 36 gebildet ist.

Anstelle von Distanzstücken 36 aus gummielastischem Material können auch solche aus Kunststoff oder sogar aus Metall oder Kombinationen hiervon Verwendung finden.

Die fünf Distanzstücke 36 sind voneinander getrennt angeordnet und liegen in vorgebbaren radialen Abständen voneinander zwischen Innen- 10 und Außenrohr 16 angeordnet in einer Ebene (s.Fig.2), die im wesentlichen senkrecht auf der jeweiligen Längsachse 18 von Innen- 10 und Außenrohr 16 steht. Das jeweilige Distanzstück 36 bildet im Prinzip eine geschlossene Schale aus, die, wie dies insbesondere die Fig.1 zeigt, mit einem konvex gekrümmten Schalenteil, das dem Innenumfang 14 des Außenrohres 16 zugewandt ist, mit diesem eine Linienberührung eingeht. Diesem Schalenteil abgekehrt und dem Außenumfang 12 des Innenrohres 10 zugewandt, weist das jeweilige Distanzstück 36 ein weiteres Schalenteil auf, das mit seiner konvexen Form in Anlage ist mit einer entsprechend konkaven Auswölbung der Ausnehmung 34, so daß entlang den Stellen der Berührung zwischen Distanzstück 36 und Ausnehmung 34 eine Flächenberührung gegeben ist. Wie dies insbesondere die Fig.1 zeigt, können also bei einer Relativbewegung der beiden Rohre 10,16, bei der diese drehend gegeneinander versetzt werden, die jeweiligen Distanzstücke 36 auf der Innenumfangsfläche 14 des Außenrohres 16 und den ihnen zugeordneten Ausnehmungen 34 entsprechend abrollen.

Anstelle der rohrförmigen Distanzstücke 36 könnten bei einer anderen Ausführungsform der erfindungsgemäßen Rohr- in Rohr-Führung auch Kugeln (nicht dargestellt) vorgesehen sein, was zu einer Punktberührung von Innenumfang 14 des Außenrohres 16 mit dem jeweiligen Distanzstück 36 führen würde. Die jeweilige Ausnehmung 34 ist dann in ihrer Ausgestaltung entsprechend der Kugelform des Distanzstückes 36 anzupassen. Vergleichbares gilt, sofern anstelle eines kreis- oder kugelförmigen Distanzstückes ein Ellipsoid od.dgl. Verwendung finden würde. Entscheidend ist, daß unabhängig von der Drehrichtung der beiden Rohre 10,16 zueinander das jeweils eingesetzte Distanzstück 36 mit einem seiner konvexen Schalenteile am Innenumfang 14 des Außenrohres 16 entsprechend abwälzen kann, was auch eine mögliche Gleitbewegung mit einschließt.

Wie insbesondere die Fig.1 zeigt, sind die Ausnehmungen 34 innerhalb des Tragkörpers 22 seitlich durch Rippen 40 begrenzt, die sich parallel zur Längsrichtung des Innen- 10 und Außenrohres 16, also zu deren Längsachsen 18 sich erstrecken. In diesen Rippen 40 sind durchgehende Bohrungen 42 vorhanden. Wie dies insbesondere die Fig.2 zeigt, sind die Rippen 40 aus einzelnen Rippenstücken gebildet, die Bestandteile der Teile 24,26 des Tragkörpers 22 sind. Die die Rippen 40 bildenden Rippenstücke der beiden Teile 24,26 des Tragkörpers 22 werden bei der Montage desselben auf dem Innenrohr 10 so lange gegeneinander gedreht, bis sich durchgehende Rippen 40 und damit Bohrungen 42 ergeben. In diesem Zustand lassen sich dann die jeweiligen Spannschellen 30 anziehen, wobei die jeweiligen Ausnehmungen 34 gebildet sind, die eine durchgehende konkave Wölbung für die Aufnahme des jeweiligen Distanzstückes 36 erzeugen. Das Innenrohr 10 selbst ist endseitig jeweils mit einer Fluidquelle und einem Fluidabnehmer (beide nicht dargestellt) entsprechend verbunden. Kommt es nun zu einem Versagen des Innenrohres 10, tritt das Fluid aus diesem aus in den Hohlraum 44, der vom Außenumfang 12 des Innenrohres 10 und dem Innenumfang 14 des Außenrohres 16 begrenzt ist. Durch die jeweiligen Distanzstücke 36 einer Abstandhaltereinrichtung 20 ist der freie Flüssigkeitsaustausch vor und hinter der Abstandhaltereinrichtung 20, zumindest teilweise, behindert. Um dem Fluid eine weitere Möglichkeit zu geben, neben den Durchgriffen 46 innerhalb der Distanzstücke 36, die durch deren Hohlräume gebildet sind, durchzufließen, weist der Tragkörper 22 diese Bohrungen 42 auf.

Zum Herstellen einer vollständigen Rohr- in Rohr-Führung über größere Rohrlängen (nicht dargestellt) hinweg, ist die jeweilige Abstandhaltereinrichtung 20 in vorgebbaren Abständen voneinander längs dem Außen- 16 und dem Innenrohr 10 verlaufend zwischen diesen angeordnet. In der Regel wird hierbei bei dem vorliegenden Ausführungsbeispiel zunächst die jeweilige Abstandhaltereinrichtung 20 mit ihren Distanzstücken 36 auf dem Innenrohr 10 angebracht und dann das Außenrohr 16 nachfolgend aufgeschoben. Dies ergibt ein taktweises Arbeiten bei der Herstellung der Rohr- in Rohr-Führung.

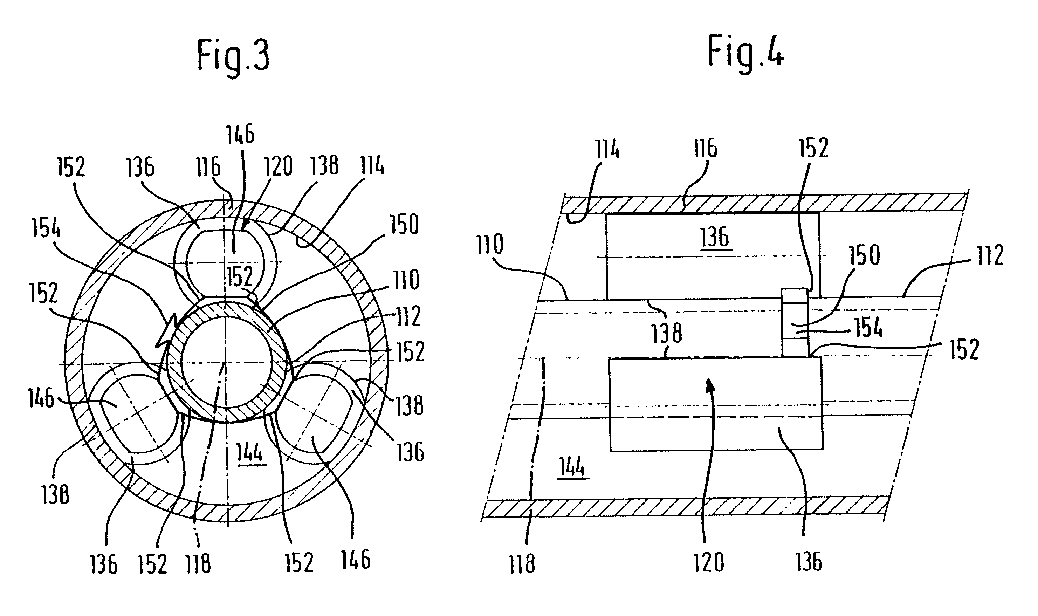

Im folgenden wird anhand der Fig.3 und 4 ein weiteres zweites Ausführungsbeispiel der erfindungsgemäßen Rohr- in Rohr-Führung vorgestellt. Soweit es sich bei dem zweiten Ausführungsbeispiel um Teile handelt, die dem ersten Ausführungsbeispiel entsprechen, sind diese mit denselben aber um jeweils 100 erhöhten Bezugsziffern wiedergegeben.

Fig.3 zeigt einen Querschnitt durch das zweite Ausführungsbeispiel der erfindungsgemäßen Rohr- in Rohr-Führung. Diese weist ein im Querschnitt kreisrundes Innenrohr 110 auf, das für den Transport eines Fluids, beispielsweise in Form von Hydrauliköl, vorgesehen ist. Dieses Innenrohr 110 ist allseitig von einem Außenrohr 116 mit ebenfalls kreisrundem Querschnitt und größerem Durchmesser umschlossen. Die Längsachsen 118 von Innenrohr 110 und Außenrohr 116 verlaufen im wesentlichen parallel und deckungsgleich zu- bzw. miteinander.

Die Abstandhaltereinrichtung 120 besteht in dem hier vorliegenden Ausführungsbeispiel nach den Fig.3 und 4 im wesentlichen aus drei Distanzstücken 136, die hülsenartig sind. Die Distanzstücke 136 sind wiederum aus jeweils einem Schlauchhohlabschnitt vorgebbarer Länge aus einem gummielastischen Material, vorzugsweise in Form von Nitril-Kautschuk, gebildet, der, wie dies insbesondere die Fig.3 zeigt, unter Vorspannung zwischen dem Innenrohr 110 und dem Außenrohr 116 angeordnet ist. Die Vorspannung der einzelnen Distanzstücke 136 zeigt sich bereits darin, daß diese entlang ihren Flächen, die dem Außenumfang 112 des Innenrohres 110 und dem Innenumfang 114 des Außenrohres 116 zugewandt sind, jeweils etwas zu ihrer Mitte hin eingedrückt sind, so daß die Distanzstücke 136 an diesen Stellen mit ihrem jeweiligen Außenumfang und damit entlang ihrer geschlossenen Außenumfangslinie 138 flächig in Anlage sind mit dem Innenrohr 110 bzw. dem Außenrohr 116. Die Lageorientierung der Distanzstücke 136 ist, ebenso wie bei dem ersten Ausführungsbeispiel der erfindungsgemäßen Rohr- in Rohr-Führung, derart, daß diese mit ihren Längsachsen im wesentlichen parallel zu den Längsachsen 118 von Innenrohr 110 und Außenrohr 116 verlaufen.

Bei dem hier vorliegenden Ausführungsbeispiel sind die jeweiligen Distanzstücke 136 entlang ihrer jeweiligen Außenumfangslinie 138, sowohl mit dem Außenumfang 112 als auch mit dem Innenumfang 114 des Innenrohres 110 bzw. des Außenrohres 116 unmittelbar in Anlage. Die Distanzstücke 136 sind wiederum in gleichen radialen Abständen voneinander um den Außenumfang 112 des Innenrohres 110 herum angeordnet. Will man eine Relativbewegung der jeweiligen Distanzstücke 136 zu den beiden Rohren 110 bzw. 116 vermeiden, ist in einer Abwandlung der vorliegenden Ausführungsform vorgesehen, zur Befestigung dieser drei Distanzstücke 136 eine Bandklemme in Form einer Stahlbandschelle 150 zum Einsatz zu bringen. Diese Stahlbandschelle 150 durchgreift im montierten Zustand jedes Distanzstück 136 an zwei hierfür vorgesehenen, einander benachbart gegenüberliegend angeordneten Schlitzen 152, die der Breite der Stahlbandschelle 150 entsprechend durch den Körper des jeweiligen Distanzstückes 136 an der Stelle hindurchgehen, die dem Innenrohr 110 zugewandt ist.

Um die drei Distanzstücke 136 mit einer Vorspannung auf dem Außenumfang 112 des Innenrohres 110 zu befestigen, weist diese Stahlbandschelle 150 eine Zusammenfaßstelle 154 auf, an der sich mittels einer handelsüblichen Zange (nicht dargestellt) der wirksame Durchmesser der geschlossenen Stahlbandschelle 150 verringern läßt.

Die Stahlbandschelle 150 greift, wie dies insbesondere die Fig.4 zeigt, nur an einem der beiden Enden des jeweiligen Distanzstückes 136 ein. Es ist aber auch möglich, vor allem wenn längere Distanzstücke 136 vorgesehen sein sollten, an mehreren Stellen entlang des Längsumfanges der Distanzstücke 136 derartige Stahlbandschellen 150 für die Befestigung auf dem Innenrohr 110 vorzusehen. Wie sich dies insbesondere aus der Fig.4 weiter ergibt, haben die Distanzstücke 136, da sie aus einem gummielastischen Material bestehen, bei einer dahingehenden Befestigung mittels nur einer Stahlbandschelle 150 an nur einem ihrer Enden die Neigung, mit ihren anderen, dem erstgenannten Ende gegenüberliegenden Enden sich vom Innenrohr 110 abzuheben. Entgegen dieser Abhebebewegung wirkt aber das aufgeschobene Außenrohr 116. Diese beschriebene Abhebebewegung bewirkt eine verstärkte Vorspannung zwischen dem der Stahlbandschelle 150 gegenüberliegenden Ende des jeweiligen Distanzstückes 136 und dem Außenrohr 116, was zur Herstellung einer festen Verbindung von Innenrohr 110 mit Außenrohr 116 mit beiträgt. Bei dieser Variante des zweiten Ausführungsbeispiels der erfindungsgemäßen Rohr- in Rohr-Führung ist also eine Abwälzbewegung der jeweiligen Distanzstücke 136 auf dem Innenumfang 114 und dem Außenumfang 112 des Außenrohres 116 bzw. des Innenrohres 110 verhindert und demgemäß nur eine Gleitbewegung möglich. Es sei allerdings betont, daß die jeweiligen Distanzstücke 136 in ihrem unverformten Zustand mit ihrer geschlossenen Außenumfangslinie 138 eine Krümmung aufweisen, die im vorliegenden Fall aus einem kreisförmigen Distanzstück 136 gebildet ist. Anstelle der hier beschriebenen, im Querschnitt kreisförmigen Distanzstücke 136 könnten auch Kugeln (nicht dargestellt) und/oder Ellipsoide verwendet werden.

Bei dem Ausführungsbeispiel gemäß den Fig.3 und 4 sind die Distanzstücke 136 mittels der Bandschelle 150 in Dreiergruppen zur Bildung einer Abstandhaltereinrichtung 120 zusammengefaßt, die im wesentlichen in einer Ebene quer zu den Längsachsen 118 der beiden Rohre 110,116 verlaufend angeordnet sind. Je nach Länge der verwendeten Rohre 110 und 116 und je nach den vorliegenden Einsatzbedingungen weisen die diesbezüglichen Dreiergruppen, die kontinuierlich entlang des Verlaufes des Innenrohres 110 auf diesem angeordnet sind, einen vorgebbaren Abstand, beispielsweise 2 m, voneinander auf. Das zweite Ausführungsbeispiel erlaubt auch eine Gestaltung der Rohr- in Rohr-Führung, bei der die Abstandhaltereinrichtung 120 in einer Rohrkrümmung der beiden Rohre 110 und 116 Verwendung findet, denn die flexiblen Distanzstücke 136 können ohne weiteres der Rohrkrümmung folgen.

Es können auch mehrere Innenrohre (nicht dargestellt) gebündelt an der Stelle des in Fig.1 und 3 gezeigten Innenrohres 10 bzw. 110 verlaufen und mittels der Distanzstücke 36 bzw. 136 zentrisch geführt sein. Diese Mittenführung kann auch mit einer anderen Anzahl von Distanzstücken 136 verwirklicht sein, die allerdings vorzugsweise die Anzahl "zwei" übersteigen sollte. Auch brauchen die im zweiten Ausführungsbeispiel angesprochenen Distanzstücke 136 nicht in Gruppen, beispielsweise in Dreiergruppen, um das Innenrohr 110 herumgruppiert sein, sondern können sich, beispielsweise spiralförmig, entlang des Rohres 110 entlangwinden.

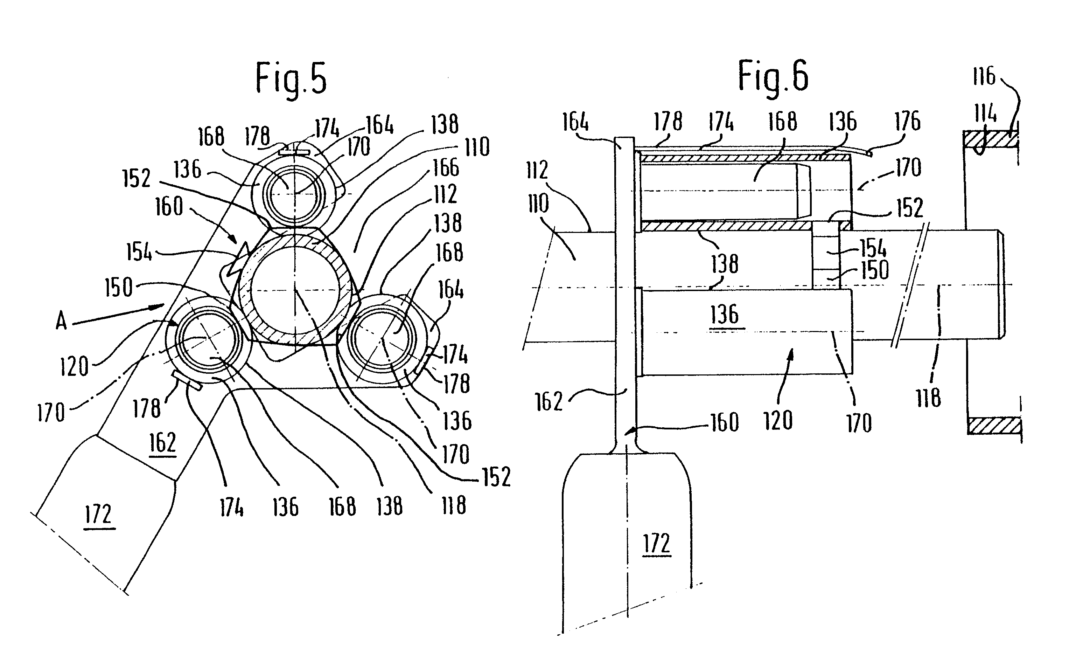

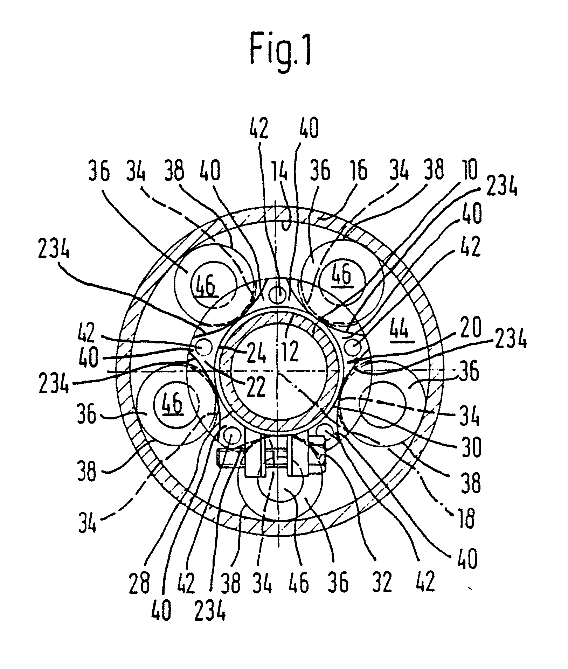

In den Fig.5 und 6 ist nun die Vorrichtung dargestellt, mit der sich auf besonders vorteilhafte Art und Weise die erfindungsgemäße Rohr- in Rohr-Führung gemäß dem zweiten Ausführungsbeispiel nach den Fig.3 und 4 herstellen läßt. Die als Ganzes mit 160 bezeichnete Vorrichtung besteht im wesentlichen aus einem zangenförmigen Grundteil 162, das aus einer im wesentlichen ebenen Grundplatte gebildet ist. Dieses Grundteil 162 weist zwei Backen 164 auf, die einander benachbart gegenüberliegend angeordnet einen nach einer Seite hin offenen Aufnahmeraum 166 begrenzen, der für die Aufnahme des Innenrohres 110 vorgesehen ist. Die Öffnungsweite des zangenförmigen Grundteils 162 und damit die Größe des Aufnahmeraumes 166 ist in Abhängigkeit von dem Außendurchmesser des Innenrohres 110 derart bemessen, daß dieses ohne weiteres aufnehmbar ist und mit seinem Außenumfang 112 an den Innenseiten der Backen 164 des Grundteils 162 in Anlage kommt. Ferner weist dieses Grundteil 162 drei Längszapfen 168 auf, deren Längsachsen 170 im wesentlichen parallel zu der Längsachse 118 des vom Grundteil 162 aufgenommenen Innenrohres 110 verlaufen. Die drei Längszapfen 168 haben einen radialen Abstand voneinander, der demjenigen radialen Abstand entspricht (s.Fig.3), den die Distanzstücke 136 später auf dem Außenumfang 112 des Innenrohres 110 einnehmen sollen. Für die Aufnahme der Distanzstücke 136 weisen die Längszapfen 168 einen kreisrunden Querschnitt mit einer Außenkontur auf, die der im Querschnitt kreisrunden Innenkontur der Distanzstücke 136 entspricht.

Das Grundteil 162 der Vorrichtung 160 ist ferner mit einem Handgriff 172 verbunden, der die Führung der Vorrichtung 160 für einen Montagevorgang erleichtert. Parallel zu den Längszapfen 168 verlaufend sind in einem radialen Abstand von diesen, der etwas größer ist als die Wandstärke des jeweiligen Distanzstückes 136, drei krallenartige Stege 174 in Form von Stahlfedern vorgesehen. Dieser vorgegebene radiale Abstand zwischen dem jeweiligen Steg 174 und dem ihm zugeordneten Längszapfen 168 erlaubt im Bereich einer Abwinkelung 176 eine Vorspannung des jeweils aufzunehmenden gummielastischen Distanzstückes 136, da dieses dann etwas nachgeben muß, um zwischen Längszapfen 168 und Steg 174 von Hand eingefügt werden zu können. Der jeweilige Steg 174 ragt, da er länger ist als der jeweilige Längszapfen 168, über diesen etwas hinaus und bildet an seinem freien Ende die bereits angesprochene Abwinkelung 176 (s.Fig.2), die der Richtung der Längsachse 18 des aufgenommenen Innenrohres 110 zugewandt ist. Diese Abwinkelung 176 dient der erleichterten Aufnahme des Außenrohres 116 beim Aufschieben auf die äußeren Anlageflächen 178 des jeweiligen Steges 174. Diese Anlageflächen 178 sind derart geformt, vorzugsweise im wesentlichen derart bogenförmig gekrümmt, daß sie ohne weiteres in Anlage mit den bogenförmig gekrümmten Flächen des Innenumfanges 114 des Außenrohres 116 kommen, sofern dieses auf die Vorrichtung 160 aufgeschoben wird.

Ein Montieren einer Gruppe von drei Distanzstücken 136 für die Herstellung der Rohr- in Rohr-Führung gestaltet sich nun wie folgt:
Zunächst werden drei gummielastische Distanzstücke 136 auf die Längszapfen 168 des Grundteils 162 der Vorrichtung 160 aufgeschoben, die sich zu diesem Zeitpunkt noch nicht in Anlage mit dem Innenrohr 110 zu befinden braucht. Hierbei werden die elastischen Distanzstücke 136 von den Stegen 174 im Bereich der Abwinkelung 176 radial zur Längsachse 118 gedrückt (s.Fig.6). Nachdem die drei Distanzstücke 136 derart auf den Längszapfen 168 angeordnet sind, wird das Grundteil 162 mittels des Handgriffes 172 von hand derart auf das Innenrohr 110 aufgeschoben, daß dieses von den Backen 164 umfaßt im Aufnahmeraum 166 des Grundteils 162 zu liegen kommt.

In diesem Montagestadium sind dann automatisch mittels der Längszapfen 168 die drei Distanzstücke 136 in eine Lage um das Innenrohr 110 herumgruppiert, daß sie einen gleichmäßigen Abstand voneinander um den Außenumfang 112 des Innenrohres 110 herum aufweisen.

Nun wird bei der einen Variante des zweiten Ausführungsbeispieles die Stahlbandschelle 150 von Hand durch die Schlitze 152 der Distanzstücke 136 hindurchgefädelt; die Enden der Bandschelle 150 miteinander verbunden und an der Zusammenfaßstelle 154 mittels einer Hilfszange (nicht dargestellt) derart angezogen, daß die Distanzstücke 136 mit ihrer Außenumfangslinie 138 an den Stellen der Berührung mit dem Außenumfang 112 des Innenrohres 110 unter Vorspannung auf diesem zu liegen kommen.

Anschließend wird das Außenrohr 116 mit seinem Innenumfang 114 entlang der Abwinkelung 176, die der Unterstützung der Zentrierung für das Außenrohr 116 während des Montagevorganges dient, auf die Stege 174 mit ihren vorzugsweise kreisbogenförmigen Anlageflächen 178, die dem Innenumfang 114 des Außenrohres 116 angepaßt sind, aufgeschoben. Soweit bei diesem Aufschiebevorgang eine gewisse Nachgiebigkeit der Stege 174 erforderlich ist, damit sich das Außenrohr 116 beim Aufschieben nicht verkantet, ist dies gewährleistet, da die Stege 174 aus einem federelastischen Material gebildet sind. Ist das Außenrohr 116
mit seinem freien Ende dann über die Stege 174
bis zum Grundteil 162 der Vorrichtung 160 vorgeschoben worden, wird dieser mittels des Handgriffes 172 von Hand so lange axial parallel zu den
Längsachsen 118 von Innenrohr 110 und Außenrohr 116 verfahren, bis die Längszapfen 168 außer
Eingriff sind mit den Distanzstücken 136 und die
Stege 174 außer Eingriff mit dem Außenrohr 116
kommen.

Sobald die Vorrichtung 160 somit außer Eingriff
mit den beiden Rohren 110 und 116 ist, ergibt sich
ein Bild der Rohr- in Rohr-Führung, wie sie in Fig.3
im Querschnitt angegeben ist. Die Vorrichtung 160
steht nun für das Anbringen eines weiteren Dreierpaketes von Distanzstücken 136 in einem vorgebbaren axialen Abstand von dem derart montierten
Dreierpaket zur Verfügung. Hierbei können die
Distanzstücke 136 in einem Dreierpaket derart angeordnet werden, daß sie mit dem vorangehenden
Dreierpaket in Bezug auf die jeweiligen Längsachsen 170 fluchten. Es kann aber, soweit dies aus
Praktikabilitätsgründen notwendig sein sollte, ein
Winkelversatz vorgenommen werden, bei dem die
jeweiligen Längsachsen der kontinuierlich hintereinander angeordneten Distanzstücke 136 einen radialen Winkelabstand miteinander bilden. Auf diese
Weise können nacheinander Dreierpakete von Distanzstücken 136 auf dem Innenrohr 110 zur Herstellung der Rohr-in Rohr-Führung angebracht werden.

Mit 234 in Fig.1 mit durchgezogenen Strichen
ist eine Ausnehmung angegeben, deren Krümmung
im Querschnitt schwächer ist als die Krümmung
der jeweils aufgenommenen Distanzstücke 36.
Hierbei handelt es sich um eine Variante des ersten Ausführungsbeispieles der Erfindung gemäß
den Fig.1 und 2. Wie sich insbesondere aus der
Fig.1 ergibt, ist zwischen dem jeweiligen Distanzstück 36 und der ihm zugeordneten Ausnehmung
234 ein Spiel gegeben, das mit der Verjüngung der
jeweiligen Ausnehmung 234 zu den Rippen 40 hin
abnimmt. In Fig.1 sind die Distanzstücke 36 im
Hinblick auf diese Variante der Erfindung in ihrer
Grundstellung dargestellt, bei der sie im wesentlichen eine Linienberührung mit den ihnen zugeordneten Ausnehmung 234 einnehmen. Ferner ist bei
dieser Variante dafür Sorge getragen, daß der
Tragkörper 22 mittels der beiden Spannschellen
30, die auf den beiden hülsenartigen Fortsätzen 28
angelegt sind, eine feste Verbindung mit dem Innenrohr 10 eingeht. Durch die verschiedenen
Krümmungen von Distanzstücken 36 und den ihnen zugeordneten Ausnehmungen 234 steht den
Distanzstücken 36 ein gewisses Maß an freiem
Abrollweg zur Verfügung. Drehen sich, beispielsweise in axialer Richtung in Fig.1 betrachtet, die beiden Rohre 10 und 16 derart gegeneinander, daß
das Innenrohr 10 entgegen und das Außenrohr 16
im Uhrzeigersinn bewegt wird, wälzen die jeweiligen Distanzstücke 36 im Uhrzeigersinn in den zwischen Ausnehmung 234 und Außenkontur 38 des
Distanzstückes 36 gebildeten Freiraum hinein. Sofern dann die Distanzstücke aus einem gummielastischen Material gebildet sind, werden diese bei
dieser Abwälzbewegung zusammengedrückt, was
mit fortschreitender Abwälzbewegung zu einer steigenden Klemmwirkung zwischen den bewegbaren
Teilen führt, wobei eine Rückstellkraft gebildet
wird, die die Neigung hat, die beiden Rohre 10,16
in ihre Ausgangsstellung zurückzudrehen, die der
Darstellung in Fig.1 entspricht. Diese Variante kann
vor allem dann von Vorteil sein, wenn die beiden
Rohre 10 und 16 zueinander stark oszillierende
Bewegungen ausführen.

Die vorstehende Beschreibung und die Zeichnung beschränken sich nur auf die Angabe von
Merkmalen, die für die beispielsweise Verkörperung der Erfindung wesentlich sind.
Soweit daher Merkmale in der Beschreibung und in
der Zeichnung offenbart und in den Ansprüchen
nicht genannt sind, dienen sie erforderlichenfalls
auch zur Bestimmung des Gegenstandes der Erfindung.

**Ansprüche**

1. Rohr- in Rohr-Führung mit mindestens einer
Abstandhaltereinrichtung (20,120) zum vorzugsweisen zentrischen Führen eines Innenrohres (10,110)
in einem Außenrohr (16,116), die mindestens zwei
voneinander getrennt angeordnete Distanzstücke
(36,136) aufweist, die bevorzugt in einer Ebene
liegend in vorgebbaren Abständen voneinander
zwischen Innen- (10,110) und Außenrohr (16,116)
anordenbar sind, dadurch gekennzeichnet, daß das
jeweilige Distanzstück (36,136) eine geschlossene
Außenumfangslinie (38,138) aufweist, die zumindest in ihrem unverformten Zustand eine Krümmung hat, die vorzugsweise aus einem ellipsen-,
kreis- oder kugelförmigen Distanzstück (36,136)
gebildet ist.
2. Rohr- in Rohr-Führung nach Anspruch 1, dadurch gekennzeichnet, daß die jeweilige Abstandhaltereinrichtung (20) einen vorzugsweise in zwei
Teile (24,26) geteilten Tragkörper (22) aufweist, der
das Innenrohr (10) umschließt und der Ausnehmungen (34) aufweist, deren jeweilige Außenkontur im
wesentlichen der Krümmung des aufzunehmenden
Distanzstückes (36) entspricht oder schwächer ist
(234) und in die die Distanzstücke (36) lose einlegbar sind.
3. Rohr- in Rohr-Führung nach Anspruch 2, dadurch gekennzeichnet, daß die Ausnehmungen (34,234) seitlich durch Rippen (40) begrenzt sind, die sich parallel zur Längsrichtung (18) des Innen- (10) und Außenrohres (16) erstrecken, und die vorzugsweise zumindest teilweise mit durchgehenden Bohrungen (42) versehen sind.

4. Rohr- in Rohr-Führung nach Anspruch 2 oder 3, dadurch gekennzeichnet, daß an den einander gegenüberliegenden Enden des Tragkörpers (22) jeweils ein hülsenartiger Fortsatz (28) vorhanden ist, der zumindest teilweise einen durchgehenden Einschnitt aufweist.

5. Rohr- in Rohr-Führung nach Anspruch 1, dadurch gekennzeichnet, daß die Abstandhaltereinrichtung (120) Distanzstücke (136) aufweist, die zumindest teilweise entlang ihrer jeweiligen Außenumfangslinie (138) mit dem Außenumfang (112) und mit dem Innenumfang (114) des Innenrohres (110) bzw. des Außenrohres (116) unmittelbar in Anlage sind.

6. Rohr- in Rohr-Führung nach einem der Ansprüche 1 bis 5, dadurch gekennzeichnet, daß die Distanzstücke (36,136) aus einem elastischen, vorzugsweise aus einem gummielastischen Material bestehen und mit einer vorgebbaren Vorspannung zwischen Innen- (110) und Außenrohr (116) angeordnet sind.

7. Rohr- in Rohr-Führung nach einem der Ansprüche 1 bis 6, dadurch gekennzeichnet, daß das jeweilige Distanzstück (36,136) aus einem Hohlrohrabschnitt mit einer vorgebbaren Länge gebildet ist.

8. Rohr- in Rohr-Führung nach einem der Ansprüche 1 bis 7, dadurch gekennzeichnet, daß die jeweiligen Abstandhaltereinrichtungen (20,120) in vorgebbaren Abständen voneinander längs dem Außen- (16,116) und dem Innenrohr (10,110) verlaufend, zwischen diesen angeordnet sind.

9. Rohr- in Rohr-Führung nach einem der Ansprüche 1 bis 8, dadurch gekennzeichnet, daß die Distanzstücke (136) einer Abstandhaltereinrichtung (120) mit mindestens einer Klemme, vorzugsweise mit einer Bandklemme (150), in ihrer Lage auf dem Außenumfang (112) des Innenrohres (110) gehalten sind.

10. Rohr- in Rohr-Führung nach Anspruch 9, dadurch gekennzeichnet, daß die Klemme (150) die jeweiligen Distanzstücke (136) an mindestens einer Stelle durchgreift und daß in den Distanzstücken (136) für das Durchgreifen mittels der Klemme (150) Schlitze (152) vorhanden sind.

11. Vorrichtung (160) zum Herstellen einer Rohr- in Rohr-Führung mit einem zangenförmigen Grundteil (162), das mit seinen Backen (164) zumindest teilweise ein Innenrohr (110) umschließt, mit mindestens zwei, vorzugsweise drei parallel zur Längsachse (118) des Innenrohres (110) verlaufenden Längskörpern, die in gleichen radialen Abständen voneinander und im wesentlichen senkrecht auf einer Grundplatte stehend auf dieser befestigt und derart ausgebildet sind, daß sie die Distanzstücke (136) zumindest während des Montagevorganges in der hierfür vorgesehenen Lage halten.

12. Vorrichtung (160) nach Anspruch 11, dadurch gekennzeichnet, daß die Grundplatte mit einem Griff (172) zum Führen der Vorrichtung von Hand versehen ist und daß die Längskörper aus Längszapfen (168) gebildet sind, deren jeweilige Außenkontur im wesentlichen der Innenkontur der aufzunehmenden Distanzstücke (136) entspricht.

13. Vorrichtung (160) nach Anspruch 11 oder 12, dadurch gekennzeichnet, daß das Grundteil (162) mindestens zwei in Richtung der Längskörper verlaufende Stege (174) aufweist, die mit ihren Außen- und Innenflächen Anlageflächen (178) für den inneren Umfang eines Außenrohres (116) bzw. den Außenumfang der Distanzstücke (136) bilden.

14. Vorrichtung (160) nach Anspruch 13, dadurch gekennzeichnet, daß die Stege (174) entweder aus mindestens zwei konischen Halbschalen und/oder aus Krallen bildenden Teilen bestehen, die federnd nachgiebig ausgebildet sind und die an einem ihrer Enden eine Abwinkelung (176) aufweisen.

Fig.2

Fig.1

# Fig.3

# Fig.4

EP 0 409 283 A1

Fig.6

Fig.5

# Fig.1

Europäisches
Patentamt

**EUROPÄISCHER
RECHERCHENBERICHT**

Nummer der Anmeldung

**EP 90 11 4031**

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | NL-A-7 801 548   (ITT INDUSTRIES, INC.)<br>* Seite 2, Zeile 32 - Seite 3, Zeile 17; Figuren *<br>- - - | 1,5 | F 16 L 7/00 |
| X | DE-A-3 033 167   (SIEMENS AG)<br>* Zusammenfassung; Figuren *<br>- - - | 1-3 | |
| A,D | DE-U-1 900 434   (BROWN BOVERI KRUPP REAKTORBAU GMBH)<br>* Ansprüche ; Figuren *<br>- - - - - | 1 | |

| RECHERCHIERTE SACHGEBIETE (Int. Cl.5) |
|---|
| F 16 L |

Der vorliegende Recherchenbericht wurde für alle Patentansprüche erstellt

| Recherchenort | Abschlußdatum der Recherche | Prüfer |
|---|---|---|
| Den Haag | 31 Oktober 90 | BARTSCH A.W. |